# EUROPEAN PATENT SPECIFICATION

(11) **EP 3 637 164 B1**
(45) Date of publication and mention of the grant of the patent: **23.08.2023**
(21) Application number: 18382725.2
(22) Date of filing: 11.10.2018
(51) Int. Cl.: G02B 6/44

(54) **SHOTGUN RESISTANT LOOSE TUBE CABLES**
FLINTENSCHUSSSICHERE BÜNDELADERKABEL
CÂBLES TUBULAIRES LIBRES RÉSISTANTS AU FUSIL DE CHASSE

(43) Date of publication of application: 15.04.2020
(73) Proprietor: Prysmian S.p.A., 20126 Milano (IT)
(72) Inventor: GARCIA SAN EMETERIO, Marta, 08800 Vilanova i la Geltrú (ES)
(74) Representative: Herrero & Asociados, S.L.

(56) References cited:
- US-A- 6 015 954
- US-A1- 2005 281 517
- US-A1- 2009 304 338
- US-A1- 2016 202 437
- US-A1- 2016 313 529
- US-A1- 2017 235 068
- US-B1- 8 582 942

## Description

The present invention relates to fiber optic loose tube cables with coextructed double-layer buffer tubes comprising polycarbonate (PC) and polyethylene (PE).

### Background of the invention

A fiber optic loose tube cable configuration involves the use of buffer tubes made of e.g. Polybutylene terephthalate (PBT) that houses and protects a number of optical fibers, e.g. 2 to 24 optical fibers in a tube. Inside the buffer tubes the fibers can be loosely arranged, stranded together or organized into ribbons coated with protective acrylate polymer. The tubes may be filled with a tube filing compound as e.g. water blocking gel, or water swellable yarns may be provided in the tubes, together with the optical fibers. The buffer tubes are then helically or SZ stranded around a central strength member such as a dielectric (e.g. fiberglass) or steel central strength member that supports the handing weight of the cable and prevents buckling.

An aramid yarn strength member may also be found to surround the cable core of stranded tubes. Furthermore, an outer polyethylene jacket may surround the entire cable. If armoring is required for protection from rodents and other critters, a metallic tape or mesh can be formed around the sheath or jacket and a second sheath can be formed to surround the armoring.

Loose tube cables can be used e.g. in outside plant (OSP) applications, where extremes of temperature, rough handling, and mechanical disturbances make tight buffered cable unsuitable. Hence, these cables need to include different protections to withstand impacts. In some applications, the loose tube cables need to withstand the impacts of pellets fired from a shotgun. The tolerance to impacts of such loose tube cables can be measured with a shotgun test where pellets are shot into the cable. The protection added to loose tube cables are normally focused on the cable sheaths, by adding different layers to allow the cable to pass this test. However, even if the pellets do not pass through the jackets, the impact energy of the shooting may break the cable core and the buffer tubes and the test will fail so. This is translated into tube breaks causing optical fiber attenuation failure or even optical fiber breaks.

Prior art document US 2005/281517 A1 discloses fiber optic loose tube cables having a non-metallic central strength element, an outer sheath, an inner sheath and a protection strength element. The fiber optic loose tube cable further has a plurality of optical fiber buffer tubes stranded around the non-metallic central strength element and each buffer tube is made of a co-extruded double-layer. The double layer has an inner layer that may comprise polybutyl terephthalate, nylon, or polycarbonate, and an outer layer that may comprise polyethylene.

In most of the cases, the use of standard protections (thick layers of aramid yarns, helically applied aramid tapes, Fiber Reinforce Plastic FRP stranded around the cable core...) may not be enough to absorb the high energy impacts caused by the shot pellets during the shotgun test. Depending on the distance specified or requested by the customer for shooting (or even the pellet size), in some cases it is not possible to succeed and pass the test when using standard PBT buffer tubes that can easily break during the shotgun test.

Hence, an improved buffer tube that increases resistance of the cable to succeed and pass the shotgun test is desired.

### Description of the invention

The inventor has discovered that a double-layer buffer tube obtained by coextrusion increases protection and resistance of the loose tube cable to pass the shotgun test. The double-layer buffer substitutes the standard buffer material (PBT). The double-layer buffer tube comprises an inner layer made of Polycarbonate (PC) and an outer layer made of Polyethylene (PE). In some embodiments, the outer layer may be thinner than the inner layer. The proposed combination of layer materials may advantageously increase the likelihood of the loose cable to pass the shotgun test.

The invention provides a shotgun resistant fiber optic loose tube cable according to independent claim 1. Further embodiments are provided by the dependent claims.

The proposed double-layer buffer tube according to the present invention allows the loose cable to pass the shotgun test even at shorter shooting distances in comparison with loose cables found in the marketplace. Furthermore, the proposed double-layer buffer tube presents much more impact resistance due to its composition. In this respect, after carrying out the test, it has been shown that the tube can absorb the impact energy of the pellets without breaking, increasing resilience and the life duration of the loose cable. The proposed buffer tube can be provided for any length or size. The dimension of the tube may depend on the number of fibers and the cable configuration, e.g. sheath thickness, types of strength elements, strength materials, etc.

The present disclosure provides results of a shotgun test performed with the improved loose cable comprising the proposed buffer tubes against results of a conventional loose tube subjected to the same test.

### Brief description of the drawings

For a better understanding the above explanation and for the sole purpose of providing an example, some non-limiting drawings are included that schematically depict a practical embodiment.
Figures 1 shows a first embodiment of a shotgun resistant fiber optic loose tube cable according to the claimed invention.
Figure 2 shows a second embodiment of a shotgun resistant fiber optic loose tube cable according to the claimed invention.

### Description of a preferred embodiment

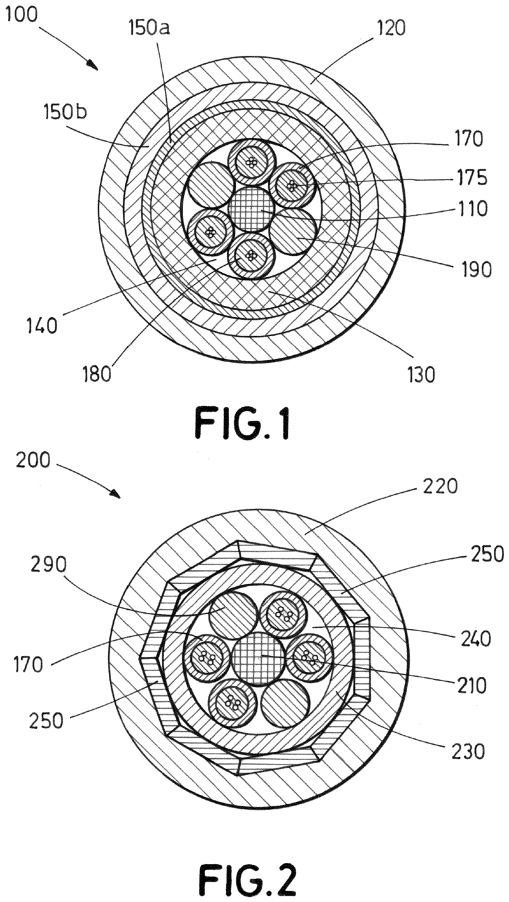

Figure 1 shows an embodiment of a shotgun resistant fiber optic loose tube cable 100 according to the claimed invention. The loose tube cable 100 comprises a non-metallic central strength element 110, an outer sheath 120 made of e.g. polyethylene (PE), an inner sheath 130 and a protection strength element. In this embodiment, the protection strength element comprises a first wrap of aramid tape 150a (optionally a second wrap of aramid tape 150b is added). Alternatively the protection strength elements 150a, 150b comprise several layers of aramid yarns. In some embodiments, the loose tube cable 100 can comprise a water blocking gel as the tube filling 180.

In other embodiments, the tube filling 180 can be a water swellable yarn. In some embodiments the loose tube cable 100 can comprise a ripcord. In other embodiments, the loose tube cable 100 can comprise water swellable yarns 140 around the central strength element 110, and/or around the tubes buffer 170.

The loose tube cable 100 further comprises coextruded double-layer buffer tubes 170 that are stranded around the non-metallic central strength element 110 in helical or SZ configuration. Each buffer tube 170 comprises a plurality of optical fibers 175 and may be filled with the tube filling 180 as e.g. gel. In some embodiments, the double-layer buffer tube 170 can be gel-free. Furthermore, the loose tube cable 100 may optionally comprise one or more filler rods 190. Filler rods are used to obtain a stable cable core of buffer tubes stranded around a central strength member. Depending on the number of optical fibers in the cable, more or less tubes or filler rods may be used. In the examples of figures 1 and 2, 4 buffer tubes and 2 filler rods are shown. As one will appreciate it is also possible to strand 6 buffer tubes or 8 buffer tubes around a central strength member without filler rods. Equally a configuration of e.g. 3 buffer tubes and 3 filler rods may be provided.

Each buffer tube 170 is made of two layers of polymers. This double-layer comprises an inner layer of polycarbonate (PC) and an outer layer of polyethylene (PE). The proposed double-layer buffer tube comprising PC and PE according to the invention has been tested in a shotgun test in comparison with conventional buffer tubes made of PBT. In some embodiments, the skin of PE may be thinner than the layer of PC.

Figure 2 shows a second embodiment of a shotgun resistant fiber optic loose tube cable 200 according to the claimed invention. The loose cable 200 comprises a non-metallic central strength element 210, an outer sheath 220 made of PE, an inner sheath 230, water swellable yarns 240 and a protection strength element. In this example, the protection strength element comprises flat Fiber Reinforced Plastic (FRP) elements 250 that are preferably helical stranded around the cable core as shown in figure 2. Furthermore, the loose tube cable 200 also comprises four optical fiber double-layer buffer tubes 170 as in figure 1 that are surrounding the non-metallic central strength element 210. Furthermore, loose cable 200 also comprises two filler rods 290.

### Shotgun Test:

A shot-gun test was performed following European standard EN 60794-1-2/A1 (2002), Method E13A and with established well-known parameters. The results are shown in the present disclosure. For the shotgun test, a shotgun bore comprising a half chocked 12-bore was used with a cartridge lead number 4, 32.g. Furthermore, the shooting distance was established in 15 meters for a first position and in 20 meters for a second position. It should be noted that different distances may be requested by different costumers. However, these two distances are the most common distances used for this type of test. The number of shots for each position are two shots. The optical measurement is a continuous measurement at 1550nm.The number of looped fibers is equal to 12, i.e. 3 per tube. Finally, the acceptance criteria selected was: No tube breakage and optical fiber attenuation increase, Δ*α* ≤0.05dB.

The shot-gun test includes four conventional prototypes comprising optical fiber buffer tubes made of PBT and four improved prototypes comprising the proposed buffer tubes made of PC + PE according to the present invention. The four plus four prototypes are provided with different inner sheets, in particular with foamed Polypropylene (PP) of a first type (PP1) and of a second type (PP2) and elastomeric material. Furthermore, aramid tapes and flat FRP have been used as strength elements to increase cable protection. The results of the shotgun test are shown in Table 1.

**Table 1**

| **Prototype** | **Buffer Tube** | **Inner Sheath** | **Cable Protection** | **Distance** | | | |
|---|---|---|---|---|---|---|---|
| | | | | 15 meters | 15 meters | 20 meters | 20 meters |
| 1 | PBT | Foamed PP1 | Aramid Tapes | FAIL | FAIL | FAIL | FAIL |
| 2 | PBT | Foamed PP2 | Aramid Tapes | FAIL | FAIL | FAIL | FAIL |
| 3 | PBT | Foamed PP1 | Flat FRP | FAIL | FAIL | FAIL | FAIL |
| 4 | PBT | Elastome ric | Aramid Tapes | FAIL | FAIL | FAIL | FAIL |
| 5 | PC+P E | Foamed PP1 | Aramid Tapes | PASS | PASS | PASS | PASS |
| 6 | PC+P E | Foamed PP2 | Aramid Tapes | FAIL | PASS | PASS | PASS |
| 7 | PC+P E | Foamed PP1 | Flat FRP | PASS | PASS | PASS | PASS |
| 8 | PC+P E | Elastome ric | Aramid Tapes | PASS | PASS | PASS | FAIL |

The results have confirmed that the proposed PC+PE buffer tube type described in the present disclosure withstands shorter shooting distances than the standard PBT buffer tubes and regardless of the design chosen. Therefore, the success rate does not depend on the cable configuration as shown in Table 1.

The term "comprises" and the derivations thereof (such as "comprising", etc.) must not be understood in an exclusive sense, i.e., these terms must not be interpreted as excluding the possibility that what is described and defined may include additional elements, steps, etc.

The description and drawings merely illustrate the principles of the invention. Although the present invention has been described with reference to specific embodiments, it should be understood by those skilled in the art that the foregoing and various other changes, omissions and additions in the form and detail thereof may be made therein.

## Claims

1. A shotgun resistant fiber optic loose tube cable (100, 200) which comprises a non-metallic central strength element (110, 210), an outer sheath (120, 220), an inner sheath (130, 230) and a protection strength element (150a, 150b, 250), wherein the shotgun resistant fiber optic loose tube cable further comprises a plurality of optical fiber buffer tubes (170) stranded around the non-metallic central strength element (110, 210), wherein each optical fiber buffer tube (170) is made of a coextruded double-layer comprising:
an inner layer of polycarbonate, PC; and
an outer layer of polyethylene, PE; and
wherein the inner sheath (130, 230) comprises foamed polypropylene

2. The shotgun resistant fiber optic loose tube cable (100, 200) according to claim 1, wherein the protection strength element (150a, 150b, 250) comprises aramid tapes.

3. The shotgun resistant fiber optic loose tube cable (100, 200) according to claim 1, wherein the protection strength element (150a, 150b, 250) comprises layers of aramid yarns

4. The shotgun resistant fiber optic loose tube cable (100, 200) according to claim 1, wherein the protection strength element (150a, 150b, 250) comprises flat Fiber Reinforced Plastic, FRP, elements.

5. The shotgun resistant fiber optic loose tube cable (100, 200) according to any of the preceding claims further comprising a water-blocking tape.

6. The shotgun resistant loose tube cable (100, 200) according to any of the preceding claims
wherein the double-layer optical fiber buffer tubes (170) comprise a filling compound

7. The shotgun resistant fiber optic loose tube cable (100, 200) according to any of the preceding claims further comprising a ripcord.

8. The shotgun resistant fiber optic loose tube cable (100, 200) according to any of the preceding claims
wherein the non-metallic central strength element (110, 210) comprises a fiber reinforced plastic.

9. The shotgun resistant fiber optic loose tube cable (100, 200) according to any of the preceding claims
wherein the outer sheath (120, 220) comprises polyethylene PE.

10. The shotgun resistant fiber optic loose tube cable (100, 200) according to any of the preceding claims
wherein the outer layer is thinner than the inner layer.

## Patentansprüche

1. Schussfestes faseroptisches Hohladerkabel (100, 200), das ein nichtmetallisches zentrales Verstärkungselement (110, 210), einen Außenmantel (120, 220), einen Innenmantel (130, 230) und ein Schutzverstärkungselement (150a, 150b, 250) umfasst, wobei das schussfeste faseroptische Hohladerkabel ferner mehrere faseroptische Pufferschläuche (170) umfasst, die um das nichtmetallische zentrale Verstärkungselement (110, 210) verseilt sind, wobei jeder faseroptische Pufferschlauch (170) aus einer koextrudierten Doppelschicht hergestellt ist, die umfasst:
eine innere Schicht aus Polycarbonat, PC; und
eine äußere Schicht aus Polyethylen, PE; und
wobei der Innenmantel (130, 230) aus geschäumtem Polypropylen besteht.

2. Schussfestes faseroptisches Hohladerkabel (100, 200) nach Anspruch 1, wobei das Schutzverstärkungselement (150a, 150b, 250) Aramidbänder umfasst.

3. Schussfestes faseroptisches Hohladerkabel (100, 200) nach Anspruch 1, wobei das Schutzverstärkungselement (150a, 150b, 250) Schichten aus Aramidgarnen umfasst.

4. Schussfestes faseroptisches Hohladerkabel (100, 200) nach Anspruch 1, wobei das Schutzverstärkungselement (150a, 150b, 250) flache faserverstärkte Kunststoffelemente (FRP) umfasst.

5. Schussfestes faseroptisches Hohladerkabel (100, 200) nach einem der vorhergehenden Ansprüche, ferner umfassend ein wasserblockierendes Band.

6. Schussfestes faseroptisches Hohladerkabel (100, 200) nach einem der vorhergehenden Ansprüche, wobei die doppellagigen faseroptischen Pufferschläuche (170) eine Füllmasse enthalten.

7. Schussfestes faseroptisches Hohladerkabel (100, 200) nach einem der vorhergehenden Ansprüche, ferner umfassend eine Reißleine.

8. Schussfestes faseroptisches Hohladerkabel (100, 200) nach einem der vorhergehenden Ansprüche, wobei das nichtmetallische zentrale Verstärkungselement (110, 210) einen faserverstärkten Kunststoff umfasst.

9. Schussfestes faseroptisches Hohladerkabel (100, 200) nach einem der vorhergehenden Ansprüche, wobei der Außenmantel (120, 220) Polyethylen (PE) umfasst.

10. Schussfestes faseroptisches Hohladerkabel (100, 200) nach einem der vorhergehenden Ansprüche, wobei die äußere Schicht dünner als die innere Schicht ist.

## Revendications

1. Câble tubulaire libre à fibre optique résistant aux fusils de chasse (100, 200), comprenant un élément de résistance central non métallique (110, 210), une gaine extérieure (120, 220), une gaine intérieure (130, 230) et un élément de résistance de protection (150a, 150b, 250),
dans lequel le câble tubulaire libre à fibre optique résistant aux fusils de chasse comprend en outre une pluralité de tubes tampons à fibre optique (170) toronnés autour de l'élément de résistance central non métallique (110, 210), et
dans lequel chaque tube tampon à fibre optique (170) est constitué d'une double couche coextrudée comprenant :
une couche intérieure de polycarbonate, PC ; et
une couche extérieure de polyéthylène, PE, et
dans lequel la gaine intérieure (130, 230) comprend du polypropylène expansé.

2. Câble tubulaire libre à fibre optique résistant aux fusils de chasse (100, 200) selon la revendication 1, dans lequel l'élément de résistance de protection (150a, 150b, 250) comprend des rubans d'aramide.

3. Câble tubulaire libre à fibre optique résistant aux fusils de chasse (100, 200) selon la revendication 1, dans lequel l'élément de résistance de protection (150a, 150b, 250) comprend des couches de fils d'aramide.

4. Câble tubulaire libre à fibre optique résistant aux fusils de chasse (100, 200) selon la revendication 1, dans lequel l'élément de résistance de protection (150a, 150b, 250) comprend des éléments plats en plastique renforcé de fibres (PRF).

5. Câble tubulaire libre à fibre optique résistant aux fusils de chasse (100, 200) selon l'une quelconque des revendications précédentes, comprenant en outre une bande de blocage d'eau.

6. Câble tubulaire libre à fibre optique résistant aux fusils de chasse (100, 200) selon l'une quelconque des revendications précédentes, dans lequel les tubes tampons à fibre optique à double couche (170) comprennent un composé de remplissage.

7. Câble tubulaire libre à fibre optique résistant aux fusils de chasse (100, 200) selon l'une quelconque des revendications précédentes, comprenant en outre un cordon de déclenchement.

8. Câble tubulaire libre à fibre optique résistant aux fusils de chasse (100, 200) selon l'une quelconque des revendications précédentes, dans lequel l'élément de résistance central non métallique (110, 210) comprend une matière plastique renforcée par des fibres.

9. Câble tubulaire libre à fibre optique résistant aux fusils de chasse (100, 200) selon l'une quelconque des revendications précédentes, dans lequel la gaine extérieure (120, 220) comprend du polyéthylène, PE.

10. Câble tubulaire libre à fibre optique résistant aux fusils de chasse (100, 200) selon l'une quelconque des revendications précédentes, dans lequel la couche extérieure est plus mince que la couche intérieure.
